# EUROPEAN PATENT APPLICATION

(11) **EP 3 672 294 A1**
(43) Date of publication of application: **24.06.2020**
(21) Application number: 18382953.0
(22) Date of filing: 20.12.2018
(51) Int. Cl.: H04W 4/80, H04W 76/14, H04W 52/02, H04L 12/28

(54) **METHOD OF POSITIONING THROUGH GPS AND BLUETOOTH LOW ENERGY**

(71) Applicant: Baintex Technologies, S.L., 46980 Paterna (Valencia) (ES)
(72) Inventor: Esteve Esteve, José Miguel, 46980 Paterna (Valencia) (ES); Escriche Izquierdo, Carlos, 46980 Paterna (Valencia) (ES); Sendra Estrella, Alberto, 46980 Paterna (Valencia) (ES)
(74) Representative: Sahuquillo Huerta, Jesús

(57) **Abstract**

A method implemented by a GPS and BLE positioning computer that is implemented in at least one portable electronic device (100) and at least one slave device (E1...En) connected, one by one, with a physical device located in a particular physical location (L1...Ln).

## Description

An object of this invention is a method to establish the position of a certain element through the BLE protocol in combination with GPS technology, so that the GPS indicates when a particular location is entering or leaving, while BLE technology is used to detect when a user is close to a particular device so they can execute automatic actions on it.

### PRIOR ART

The BLUETOOTH LOW ENERGY Protocol (hereinafter simply BLE) is the main feature of version 4.0 of the BT (Bluetooth) spec core. This version was introduced in June 2010 by the Bluetooth special interest group (SIG). Despite being based on BT Classic, the BLE protocol is a wireless technology designed to cover purposes not covered by its predecessor. The main purpose of this protocol is to design a radio standard with the least possible energy consumption, especially optimised to have a low cost, with low bandwidth, low power and equally low complexity.

The BLE protocol facilitates short-range communications between devices that do not require large data transfers, with the main idea of providing an efficient technology for monitoring and controlling applications where the amounts of data are typically very low, such as sending sensor values or control messages.

The BLE network topology is star-type. Master devices can have multiple link-layer connections with peripherals (slave devices) and simultaneously perform searches for other devices. On the other hand, a slave role device can only have one link-layer connection with a single master. In addition, a device can send data in broadcast mode, advertising events, without waiting for any connection. This allows you to send data to the devices in scanning state without having to establish the master-slave connection.

For the device management, connection and application interface BT's SIG defines a stack of protocols. The BLE protocol stack is divided into three basic parts: Controller, Host and Applications. The controller is the physical device that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the host; each operating system or environment has its own way of exposing host APIs (Application Programming Interface) for developers. This part of the stack contains a layer of logical link control and adaptation protocol, security manager, attribute protocol (ATT), generic attribute profile (GATT) and generic access profile (GAP). For each use case, applications use the software stack, which in turn uses the driver.

Bluetooth Low Energy shares some similarities with classic Bluetooth. Both use a 2.4 GHz band. Classic Bluetooth and BLE use the GFSK to 1Mbps modulation, but with different modulation indices. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth, they are incompatible with each other, so they cannot communicate. However, there are Dual Mode devices that support both technologies by switching the modulation parameters and channels where they are radiating.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity of less than -85 dBm.

The link layer is the layer responsible for the Advertising states, Scanning, creating and maintaining connections. It is also responsible for the structure of the packets. The BLE protocol defines a series of operating modes. So, in the Standby mode the device neither transmits nor receives. In general, this state is associated with a sleeper system to conserve energy.

In the advertising mode, the device that has the peripheral role enters the Advertising state in which it sends Advertising packets in the advertising channels. In this state it also hears any response (request) of the packets from the central device. This mode is the most critical way to analyse from a power point of view because the peripheral device will take an Advertising time more or less, depending on the application. It is necessary to consider that the transmission time affects energy consumption; therefore, the Advertising range directly affects the power consumption and the life of the batteries.

The Scanning mode refers to listening to Advertising packets sent through its channels. This mode is used to explore devices. In initiating mode, it is the state that the central device enters (master) before switching to connection status. The central device listens to the peripherals advertising, but once it receives the Advertising of the desired peripheral, the central device must connect by sending the correct data. For the Slave, the Advertising state is also considered an initial state before the connection state. The connection state is the last state in which the Slave (peripheral) and Master (Central) can exchange data. They exchange data periodically through connection events.

So far, the main elements that make up the BLE protocol have been described in a schematic way. In the state of the art, different documents are known that combine GPS technology with BLE technology, for example, AU2016219547 A1 or US2018288583 A1. However, this invention intends to improve the characteristics of localisation and positioning described in these documents.

### EXPLANATION OF THE INVENTION

A purpose of this invention is to offer different functionalities to a user through their portable electronic device, for example, their smartphone or electronic tablet. So, it uses GPS technology to detect when a particular physical location is entered or abandoned, while BLE technology is used to detect when the user (through their portable electronic device) is close to a certain BLE device so they can execute automatic actions on it. Another purpose of the invention are the algorithms of the accelerometer and gyroscope of the portable electronic device to detect when the user is moving -walking - or at rest and thus optimise the use of the battery and improve the detection of BLE networks. This purpose is achieved with the method of claim 1. In other claims dependent on it, particular or preferred realisations of the invention are described.

More specifically, positioning is structured hierarchically according to the different levels of precision required for the different functionalities of the invention. At the highest level, the invention uses Geofencing, based on the GPS coordinates assigned to the location, to determine if there are users in a particular location or not -for example, in the home- and generate certain events when the user is leaving and entering their location so actions such as turning the heating on/off, turning the lights on/off, or activating/deactivating the alarm can be performed.

When a user is located within a particular location, their regions are registered, which correspond to physical devices -for example, a plug- or delimited physical zones-for example, the kitchen- and the BLE scan is activated in these locations. This filtering saves battery in the use of BLE when the user is not in any location.

There are a number of problems with the way in which the different mobile platforms manage the BLE regions and have been solved by the method of this invention. One of these problems lies in the fact that the operating system does not send out the BLE region until after 30 seconds to make sure that the user is not going to re-enter, or that it is within the boundaries of the region, generating continuous input and output events. This invention, however, when the use of the accelerometer enters a BLE region, in such a way that when it detects that the user has started to move, an BLE scanner is enabled to force the re-evaluation of the state of the BLE regions and thus force the exit of the region before the state of the art.

In cases where a given zone requires a minimum distance for activation to simulate the operation of NFC proximity chips with BLE, the method maintains the zone's BLE scan to detect that the user's portable electronic device is close enough, or they are moving away such that it can validate the action only when the portable electronic device is in contact with our device. Contact is defined as a distance equal to or less than 15 cm.

Another problem that the system manages is the overlap of various BLE zones. If a user has multiple devices in their location with large zones of action it may be the case that they overlap giving rise to a state of uncertainty. Different signal quality ranges have been used for them depending on whether one is entering or leaving a zone, as well as different values according to the size of the zone configured by the user. As long as the user remains still BLE scans are avoided, as well as while the user is in motion, so as not to detect zone-transitioning events.

Throughout the description and claims the word "comprises" and its variants are not intended to exclude other technical characteristics, additives, components or steps. For experts in the field, other objects, advantages and characteristics of the invention will be gathered partly from the description and partly from the use of the invention. The following examples and drawings are provided as an illustration and are not intended to restrict this invention. In addition, this invention covers all possible combinations of particular and preferred realisations indicated herein.

### BRIEF DESCRIPTION OF THE FIGURES

Below a series of drawings are briefly described that help to better understand the invention and are explicitly related to a realisation of such an invention that is presented as a non-limiting example thereof.
**FIG 1****.** Shows a schematic of the portable electronic device 100 that implements the positioning method via GPS and BLE.
**FIG 2****.** Shows a diagram with an example of a physical location determined by its GPS coordinates and a user with its portable electronic device 100 outside of it.
**FIG 3****.** The diagram in FIG. 2 shows what happens when the user enters with their portable electronic device 100 at the physical location determined by its GPS coordinates.
**FIG 4****.** The diagram in FIG. 2 shows what happens when the user exits with their portable electronic device 100 at the physical location determined by its GPS coordinates.

### DETAILED EXPLANATION OF ONE MODE OF REALISATION OF THE INVENTION

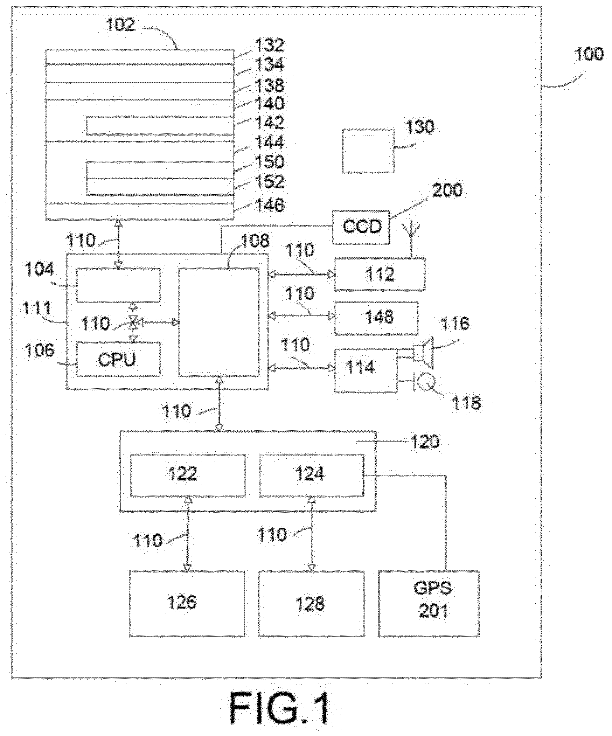

This invention is implemented on a portable electronic device 100 that can be any selected among computers, tablets and mobile phones, although a preferred architecture for a mobile device is shown in figure 1. In general, any programmable communications device can be configured as a device for this invention.

Figure 1 illustrates a portable electronic device, based on certain realisations of the invention. The invention's portable electronic device 100 includes a memory 102, a memory controller 104, one or more processing units (CPU) 106, a peripherals interface 108, an RF circuit system 112 an audio circuit system 114, a loudspeaker 116, a microphone 118, an input/output subsystem (I/O) 120, a touch screen 126, other input 128 or monitoring devices and an external port 148. These components communicate with each other on one or more communication buses or signal lines 110. The device 100 can be any portable electronic device, including, but not limited to, a laptop, a tablet, a mobile phone, a multimedia player, a personal digital assistant (PDA), or similar device, including a combination of two or more of these items. It should be observed that the device 100 is only one example of a portable electronic device 100 and that the device 100 may have more or fewer components than those displayed or a different configuration of components. The different components shown in Figure 1 can be implemented in hardware, software, or a combination of both, including one or more integrated circuits of specific application and/or signal processing. Likewise, the screen 126 is defined as touch, although the invention can also be implemented on devices with a standard screen.

The memory 102 may include a high-speed random-access memory and may also include non-volatile memory, such as one or more magnetic disk storage devices, flash memory devices or other non-volatile solid state memory devices. In some realisations, the memory 102 may also include remote storage with respect to one or more processors 106, such as a storage connected to a network that is accessed through the RF circuits system 112 or external port 148 and a communications network (not shown) such as the Internet, intranet(s), local area networks (LANs), extended local area networks (WLAN), storage area networks (SAN), and so forth, or any of their appropriate combinations. Access to memory 102 by other components of the device 100, such as the CPU 106 and the peripherals interface 108, can be controlled by the memory controller 104.

The peripherals interface 108 connects the device's input and output peripherals to the CPU 106 and the memory 102. One or more processors 106 run different software programs and/or instruction sets stored in memory 102 to perform the different functions of the device 100 and for data processing.

In some realisations, the peripheral interface 108, the CPU 106, and the memory controller 104 can be deployed on a single chip, such as a chip 111. In certain other realisations they can be implemented on multiple chips.

The RF (radio frequency) circuit system 112 receives and sends electromagnetic waves. The RF circuit system 112 converts electrical signals into electromagnetic waves and vice versa and communicates with communications networks and other communications devices through electromagnetic waves. The RF circuit system 112 can include a widely known circuit system to perform these functions, including but not limited to an antenna system, RF transceiver, one or more amplifiers, a tuner, one or more oscillators, a digital signal processor, a set of CODEC chips, a subscriber identity module (SIM) card, a memory, or any other. The RF circuit system 112 can communicate with networks, such as the Internet, also known as the World Wide Web (WWW), an Intranet and/or a wireless network, such as a cellular telephone network, a wireless local area network (LAN) and/or a metropolitan area network (MAN) and with other devices using wireless communication. Wireless communication can use any of multiple communications standards, protocols and technologies, including, but not limited to, the global mobile communications system (GSM), the enhanced data GSM environment (EDGE), the wideband code division multiple Access (W-CDMA), code division multiple access (CDMA), time division multiple access (TDMA), Bluetooth (particularly Bluetooth 4.0), wireless access (Wi-Fi under protocols, for example, IEEE 802.11 a, IEEE 802.11 b, IEEE 802.11 g and/or IEEE 802.11 n), Voice over IP protocol (VoIP), Wi-MAX, a protocol for e-mail, instant messaging and/or short message Service (SMS) or any other appropriate communication protocol, including communication protocols not yet developed on the date of submission of this document.

The audio circuit system 114, the loudspeaker 116 and the microphone 118 provide an audio interface between a user and the device 100. The audio circuit system 114 receives audio data from the peripherals interface 108, converts the audio data into an electrical signal and transmits the electrical signal to the loudspeaker 116. The loudspeaker converts the electrical signal to sound waves that are audible for human beings. The audio circuit system 114 also receives electrical signals converted by microphone 116 from sound waves. The audio circuits system 114 converts the electrical signal into audio data and transmits the audio data to the peripherals interface 108 for processing. The audio data can be recovered and/or transmitted to the memory 102 and/or the RF circuit system 112 via the peripherals interface 108. In some realisations, the audio circuit system 114 also includes a headphone connection (not shown). The headphone connection provides an interface between the audio circuits system 114 and removable audio input/output peripherals, such as output-only headphones or both output earphones (earphones for one or both ears) and input earphones (microphone).

The I/O subsystem 120 provides the interface between the input/output peripherals of the device 100, such as the touch screen 126 and other input/control devices 128, and the peripherals interface 108. The I/O subsystem 120 includes a touchscreen controller 122 and one or more input controllers 124 for other input or control devices. The input controller(s) 124 receive/send electrical signals to/from other input or control devices 128. The other input/control devices 128 may include physical buttons (e.g. push buttons, toggle buttons, etc.), dials, slide switches, and/or geographic location media 201, such as GPS or equivalent.

The touch screen 126 in this practical realisation provides both an output interface and an input interface between the device and a user. The touch screen controller 122 receives/sends electrical signals to/from touch screen 126. The touch screen 126 displays the user's visual output. The visual output can include text, graphics, video and any combination thereof. Part or all of the visual output can be matched with user interface objects, the additional details of which are later described.

The touch screen 126 also accepts user inputs based on haptic or touch contact. The touch screen 126 forms a contact-sensitive surface that accepts the user's inputs. The touch screen 126 and touch screen controller 122 (along with any of the associated modules and/or sets of memory instructions 102) detects contact (and any movement or loss of contact) on the touch screen 126 and converts the detected contact into interaction with UI objects, such as one or more programmable keys that are displayed on the touchscreen. In one realisation, to give an example, a point of contact point between the touch screen 126 and the user corresponds to one or more of the user's fingers. The touch screen 126 can use LCD (liquid crystal display) technology or LPD (light-emitting polymer display) technology, although other display technologies can be used in other realisations. The touch screen 126 and the touch screen controller 122 can detect contact and any movement or lack of it using any of multiple contact sensitivity technologies, including, but not limited to, capacitive, resistive, infrared and surface sound-wave technologies, as well as other proximity sensor provisions or other elements to determine one or more contact points with the touch screen 126.

The device 100 also includes a power supply system 130 to feed the different components. The power supply system 130 can include an energy management system, one or more power supplies (e.g. batteries, AC), a rechargeable system, a power failure detection circuit, an energy converter or inverter, an energy state indicator (for example, a light-emitting diode (LED)) and any other component associated with power generation, management, and distribution on portable devices.

In some realizations, software components include an operating system, a communication module 134 (or instruction set), a contact/motion module 138 (or instruction set), a graphic module 140 (or instruction set), a user interface status module 144 (or instruction set) and one or more applications (or instruction set) 146.

The operating system 132 (e.g. iOS, RTXC, LINUX, UNIX, OS X, WINDOWS or an embedded operating system), includes different software components and/or controllers to control and manage general system tasks (e.g. memory management, storage device control, energy management, etc.) and facilitates communication between the different hardware and software components.

The communication module 134 facilitates communication with other devices through one or more external ports 148 and also includes different software components to manage the data received by the RF circuit system 112 and/or external port 148. The external port 148 (e.g. Universal Serial Bus (USB), FIREWIRE, etc.) is adapted to connect directly to other devices or indirectly over a network (e.g., Internet, wireless LAN, etc.).

The contact/motion module 138 detects contact with the touch screen 126, along with the touch Screen controller 122. The contact/motion module 138 includes different software components to perform different operations related to detecting contact with the touch screen 126, such as determining whether the contact has occurred, determining whether there is movement of the contact and keep track of the movement through the touch screen, and determine if the contact has been interrupted (i.e. if the contact has stopped). The determination of the movement of the contact point may include determining the speed (magnitude), velocity (magnitude and direction) and/or acceleration (including magnitude and/or direction) of the point of contact. In some realisations, the contact/motion module 126 and the touch screen controller 122 also detect contact on the touch pad.

The graphic module 140 includes different well-known software components for showing and displaying graphics on the touch screen 126. Note that the term "graphics" includes any object that may be shown to a user including, but not limited to text, web pages, icons (such as user interface objects that include programmable keys), digital images, videos, animations and the like.

In some realisations, the graphic module 140 includes an optical intensity module 142. The optical-Intensity module 142 controls the optical intensity of graphical objects, such as user interface objects, shown on the touch screen 126. Optical intensity control may include increasing or decreasing the optical intensity of a graphic object. In some realisations, the increase or decrease can follow predetermined functions.

The user interface status module 144 controls the status of the device's user interface 100. The user interface status 144 can include a locking module 150 and an unlocking module 152. The block module detects the satisfaction of any one or more conditions to transition the device 100 to a locked state in the user interface and transition the device 100 to the locked state. The unlock module detects whether any one or more conditions are met to transition the device 100 to a locked state in the user interface and transition the device 100 to the locked state.

The application(s) 130 may include any application installed on the device 100, including, but not limited to, a browser, address Book, contact list, email, IM, word processing, keyboard emulation, graphical objects, JAVA applications, encrypting, digital device management, voice recognition, voice replication, position determination capability (such as that provided by the global positioning system (GPS)), a music player (which plays recorded music stored on one or more files, such as MP3 or AAC files), or any other, including the application object of the invention.

In some realisations, the device 100 may include one or more optional optical sensors (not shown), such as CMOS or CCD 200 image sensors, for use in imaging applications.

However, the hardware structure indicated is one of those that are possible, and it should be noted that the device 100 can include other image capture elements such as camera, scanner, laser plotter or the combination of any of these types of devices, which can provide the mobile device with the representation of the real environment in video format, image sequence, vector format or any type of combination of the aforementioned formats.

Similarly, the device 100 may include geographic location devices based on GPS positioning satellite networks, geographic location assist devices based on GPS satellite networks and Internet network IP -AGPS- location, geographic localisation devices based on the triangulation of radio signals provided by WIFI antennas and Bluetooth® devices (ISSP), the combination of any of these devices mentioned or any type of device that will provide the mobile device with numerical data about its geographical location. The 100 device includes, in addition to the aforementioned GPS media, AGPS and ISSP, an accelerometer and a gyroscope.

The device 100 can include any type of element capable of representing real-time images with a minimum of 24 FPS (frames per second) such as TFT, TFT-LED, TFT-OLED, TFT-Retina, the combination of any of the above, in addition to new generation Holo-TFT screens, transparent and Micro-projectors or any graphic representation device that can provide the mobile device 100 a way to represent visual content to user.

The device 100 includes a processor or set of processors that by themselves or in combination with graphics processors such as GPU (Graphics Processing Unit) or APU (Accelerated Processing Unit) can provide the mobile device 100 with the ability to represent, at actual runtime, vector graphics and shape textured polygons with these, through libraries of vector representation (sets of standardised procedures of graphical representation for different platforms) like OpenGL, DirectX or any type of libraries used for this task.

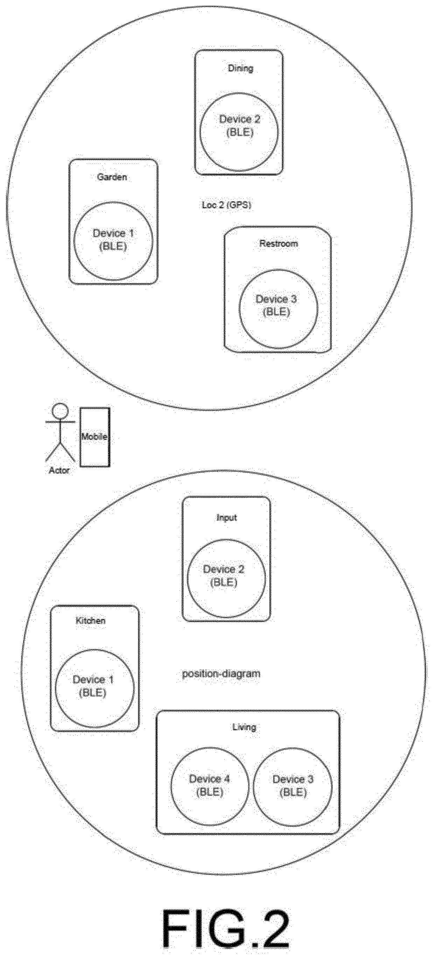

In reference to figure 2, the system implementing the method of this invention comprises at least one portable electronic device 100, as described in reference to figure 1, where such mobile device 100 is configured on a network under the BLE protocol as *master* of multiple devices configured as slaves (E1 ...En).

In this invention it is understood that a *master* device can be paired with one or more slaves (E1...En) within a single location at the same time. By location, specific geographical locations (for example, building "A") and locations within geographical locations (e.g., room 1, building "A") will be understood. BLE region is defined as the range of action of a certain BLE device configured as a slave (E1...En) and associated with a certain physical device -a plug, heating or any other- to be controlled within that physical location.

The location's BLE regions (L1...Ln) can be configured with different signal powers depending on the area of action to be covered with each of them. Thus, the area corresponding to the garage entrance door- for example- may have a greater range of action to be detected by the portable electronic device 100 when it is in the car in approximation to the garage door, while the area corresponding to the lock of the house may have a much smaller range of action and thus may only be detected when the user is close by, for example, in a particular non-limiting realisation, at a distance of less than 15 cm.

On the other hand, a BLE device configured as *slave* (E1...En) is defined as any device within a particular location that comprises or integrates a processor and a memory that stores a program or programs that include a plurality of instructions that, when executed by the processor, make the slave device (E1...En) respond to a given instruction received from a portable electronic device 100 configured as master and paired using BLE with said slave device (E1...En) in a given location (L1...Ln).

In the example in figures 2 to 4, a specific GPS location (L1) can be observed. This location, in turn, comprises three BLE zones or regions (L1', L1", L1"') which correspond, as a non-limiting example, with the kitchen L1', the input L1" or the room L1"'of a location L1 which is, for example, a house. In addition, each BLE zone (L1', L1", L1"') comprises at least one BLE device (E1 ...E4) with the particularity that the room L1"' comprises two BLE devices (E3, E4).

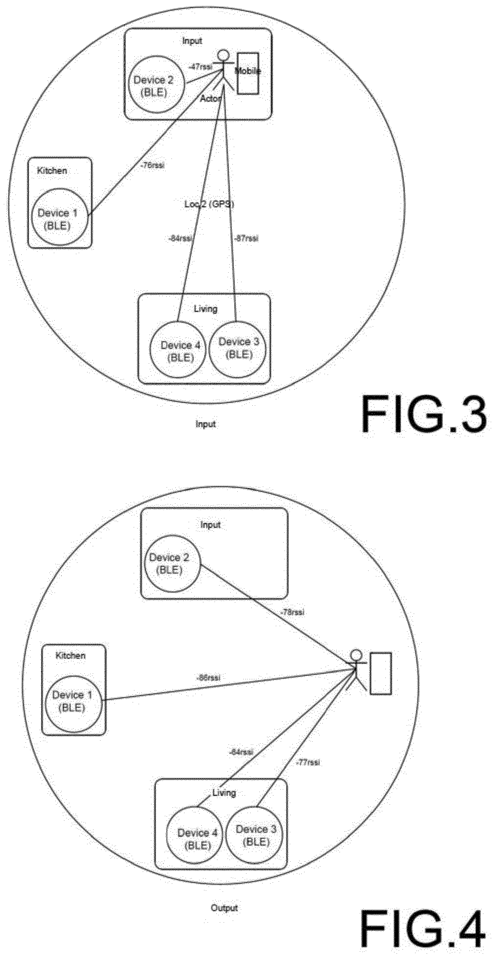

The portable electronic device 100 (hereinafter, simply the device 100) of a user 101, when it reaches the location L1 detects by Geofencing its presence in the zone and generates an input log. When entering (figure 3), the automatic actions established and associated with the input are executed, which include, at least, activating Bluetooth (BT) on the device 100, as well as its accelerometer.

After this, the device 100 scans the area for BLE devices (E1... E4) in its range within the location L1, distinguishing contact BLE devices and those in the vicinity. In addition, to save energy reduces the accuracy of the GPS of the device 100.

Once within the location L1, if no BLE region (L1', L1", L1"') is detected and the device 100 is in motion- by the accelerometer signal or the gyroscope of the device 100-the device 100 continues to scan BLE devices (E1...E4) until it detects a BLE region (L1', L1", L1"') whereas if the device 100 is stopped the BT of the device 100 is deactivated to save energy.

However, when a BLE region (L1', L1", L1"') is detected and the device 100 is stopped, the BLE device(s) in range (E1...E4) of the BLE region (L1', L1", L1"') if it is a proximity or close-range device (which requires that the device 100 be at a distance less than X value, preferably 15 centimetres) such that if it is a BLE contact region, such as the input L1", an input log is generated and the automatic actions defined for that BLE device (E2) are executed. In the example in figures 2 to 4, since this is the L1" input to location L1, the automatic actions could be "open lock" and "turn on lights", for example. At the end of automatic actions, if the device 100 is stopped, the BT of the 100 device is disabled.

On the other hand, if the device 100 moves and the BLE signals are scanned at that moment, the mean power of the signals (RSSI) and for each BLE device (E1... E4) is obtained; if the average power is less than a value and defined, the device 100 is identified as within the BLE zone (L1', L1", L1"') and the automatic actions defined for that BLE zone (L1', L1", L1"') are executed, whereas if the power (RSSI) is greater than that aforementioned value Y, the device 100 being identified as being "within the BLE zone", then the algorithm assumes that it is outside the BLE zone, it is recorded in the log and the actions associated with the output of the BLE zone (L1', L1", L1"') where the device 100 was located are executed.

Finally, if it leaves a certain location L1, an output log is recorded, the automatic actions associated with the output are executed, the logging of BLE devices (E1... E4) on the device 100 is cancelled, the BLE scan and accelerometer are disabled and the accuracy of the GPS in the device 100 is increased.

## Claims

1. A method implemented by a GPS and BLE positioning computer that is implemented in at least one portable electronic device (100) and at least one slave device (E1 ...En) connected, one by one, to a physical device located in a particular physical location (L1...Ln); and where the method is **characterised** because it comprises the stages of: **(a)** using Geofencing to detect the presence of the portable electronic device in a certain physical location (L1...Ln) and execute multiple automatic actions associated with that physical location (L1 ...Ln) including, at least, activating an accelerometer of the portable electronic device (100), activating the Bluetooth scan of the portable electronic device (100) and reducing the accuracy of the GPS of the portable electronic device (100); **(b)** once within a location (L1...Ln) If no BLE region (L1', L1", L1"') is detected and the portable electronic device (100) is in motion it continues with the scanning of BLE devices (E1...E4) until it detects a BLE region (L1', L1", L1"'); **(c)** when a BLE region (L1', L1", L1"') is detected and the portable electronic device (100) is stopped, the BLE device or devices in reach (E1...E4) of the BLE region (L1', L1", L1"') if it is a proximity or close-range device; and **(d)** if the portable electronic device (100) is moved and stops, the BLE signals are scanned at that moment, the mean signal power (RSSI) is obtained and for each BLE device (E1...E4), if the average power is less than a defined value, the portable electronic device (100) is identified as being within the BLE zone (L1', L1", L1"') and the automatic actions defined for that BLE zone are executed (L1', L1", L1"'), whereas if the power (RSSI) is greater than the aforementioned value, with the portable electronic device (100) previously in a BLE zone (L1', L1", L1"'), then the algorithm assumes that it is outside the BLE zone, the actions associated with the output of the BLE zone (L1', L1", L1"') where the portable electronic device (100) was located are executed.

2. The claim 1 method of where if the portable electronic device (100) is stopped the BLE scan of the portable electronic device (100) is deactivated.

3. The method of one of claims 1 or 2 where if the portable electronic device (100) leaves a certain location (L1...Ln) the automatic actions associated with the output are executed, the BLE devices are unregistered (E1 ...E4) on the portable electronic device (100), the BLE scan and accelerometer are disabled and the GPS accuracy in the portable electronic device (100) is increased.

4. The method according to any of the previous claims where the *slave* device (E1...En) is a physical device within a particular location that comprises or integrates a processor and a memory that stores a program or programs that include multiple instructions that, when are executed by its processor, make the slave device (E1...En) respond to a given instruction received from a master device (M1...Mn) paired with this slave device (E1...En) via BLE in a given physical location (L1...Ln).
